# FASCICULE DE BREVET EUROPEEN

(11) **EP 1 928 742 B1**
(45) Date de publication et mention de la délivrance du brevet: **06.09.2017**
(21) Numéro de dépôt: 06806821.2
(22) Date de dépôt: 26.09.2006
(51) Int. Cl.: B64D 27/26, B64D 27/18

(54) **ENSEMBLE MOTEUR POUR AERONEF COMPRENANT UN MOTEUR AINSI QU'UN MAT D'ACCROCHAGE D'UN TEL MOTEUR**
MOTORANORDNUNG FÜR EIN FLUGZEUG MIT EINEM MOTOR SOWIE EINER MOTORMONTAGESTRUKTUR
ENGINE ASSEMBLY FOR AN AIRCRAFT COMPRISING AN ENGINE AS WELL AS AN ENGINE MOUNTING STRUCTURE

(30) Priorité: 28.09.2005 FR 0552932
(43) Date de publication de la demande: 11.06.2008
(73) Titulaire: AIRBUS OPERATIONS, 31060 Toulouse (FR)
(72) Inventeur: LAFONT, Laurent, 31320 Pechbusque (FR); JOURNADE, Frédéric, 31100 Toulouse (FR)
(74) Mandataire: Ilgart, Jean-Christophe
(86) Numéro de dépôt international: PCT/EP2006/066738
(87) Numéro de publication internationale: WO 2007/036521

(56) Documents cités:
- EP-A- 1 129 942
- FR-A- 2 698 068
- US-A1- 2003 201 366
- US-B1- 6 398 161

## Description

### DOMAINE TECHNIQUE

La présente invention se rapporte de façon générale au domaine des mâts d'accrochage de moteur destinés à être interposés entre une voilure d'aéronef et un moteur, et plus particulièrement à un ensemble moteur comprenant un tel mât d'accrochage, comme par exemple décrit dans le document EP 0 469 825.

L'invention peut être utilisée sur tout type d'aéronef équipé par exemple de turboréacteurs ou de turbopropulseurs.

Ce type de mât d'accrochage, également appelé « EMS » (de l'anglais « Engine Mounting Structure »), permet par exemple de suspendre un turbomoteur au-dessous de la voilure de l'aéronef, ou bien de monter ce turbomoteur au-dessus de cette même voilure.

### ETAT DE LA TECHNIQUE ANTERIEURE

Un tel mât d'accrochage est en effet prévu pour constituer l'interface de liaison entre un moteur tel qu'un turboréacteur et une voilure de l'aéronef. Il permet de transmettre à la structure de cet aéronef les efforts générés par son turboréacteur associé, et autorise également le cheminement du carburant, des systèmes électriques, hydrauliques, et air entre le moteur et l'aéronef.

Afin d'assurer la transmission des efforts, le mât comporte une structure rigide, souvent du type « caisson », c'est-à-dire formée par l'assemblage de longerons supérieur et inférieur et de deux panneaux latéraux raccordés entre eux par l'intermédiaire de nervures transversales.

D'autre part, le mât est muni d'un système de montage interposé entre le turboréacteur et la structure rigide du mât, ce système comportant globalement au moins deux attaches moteur, généralement une attache avant et une attache arrière.

De plus, le système de montage comprend un dispositif de reprise des efforts de poussée générés par le turboréacteur. Dans l'art antérieur, ce dispositif prend par exemple la forme de deux bielles latérales raccordées d'une part à une partie arrière du carter de soufflante du turboréacteur, et d'autre part à l'attache moteur arrière fixée sur le carter de ce dernier.

De la même façon, le mât d'accrochage comporte également un second système de montage interposé entre la structure rigide de ce mât et la voilure de l'aéronef, ce second système étant habituellement composé de deux ou trois attaches.

Enfin, le mât est pourvu d'une structure secondaire assurant la ségrégation et le maintien des systèmes tout en supportant des carénages aérodynamiques, dont le carénage aérodynamique arrière faisant habituellement saillie du bord de fuite de l'aile, vers l'arrière.

Par ailleurs, l'ensemble moteur est généralement équipé d'un système de protection thermique du caisson comprenant un conduit de préférence ventilé situé à l'avant de ce même caisson, sous le longeron inférieur. Cependant, ce conduit traversé par un faible débit d'air ne procure qu'un refroidissement médiocre de la structure rigide, qui est de toute façon uniquement localisé au niveau de la partie avant du caisson rigide.

### EXPOSÉ DE L'INVENTION

L'invention a donc pour but de proposer un ensemble moteur pour aéronef remédiant au moins partiellement aux inconvénients mentionnés ci-dessus relatifs aux réalisations de l'art antérieur, et également de présenter un aéronef disposant d'au moins un tel ensemble moteur.

Pour ce faire, l'invention a pour objet un ensemble moteur pour aéronef comprenant un moteur et un mât d'accrochage du moteur, comme dans la revendication 1. Ainsi, cet agencement selon l'invention permet d'obtenir un refroidissement très satisfaisant du caisson, puisque c'est une très grande partie du longeron inférieur qui est protégée par le conduit, naturellement dans le cas où le moteur est destiné à être suspendu sous l'aile. La présence de ce dernier participe donc à rendre possible l'utilisation d'un matériau composite pour la fabrication du caisson de la structure rigide, dont la masse peut ainsi être largement diminuée par rapport à celle rencontrée dans les structures rigides métalliques antérieures.

D'autre part, il doit donc être compris que l'extrémité arrière de ce conduit débouche au-delà de l'attache moteur arrière, à un niveau où les pressions sont sensiblement moins élevées que celles rencontrées en amont de cette attache moteur. Par conséquent, le différentiel de pression obtenu est largement supérieur à celui rencontré antérieurement en raison de la forte aspiration rencontrée en sortie du conduit lorsque ce dernier est de nature « ventilée », c'est-à-dire traversé par un débit d'air, ce qui permet d'augmenter sensiblement ce débit d'air, et donc d'accroître l'efficacité du système de protection thermique du caisson.

Par ailleurs, étant donné que l'extrémité arrière du conduit se trouve à l'arrière de l'attache moteur arrière, il devient alors aisé de faire déboucher cette extrémité dans le jet du moteur, et par la même d'utiliser l'air éjecté du conduit ventilé comme générateur additionnel de poussée.

Préférentiellement, le conduit ventilé dispose d'une extrémité arrière débouchant au niveau de la paroi extérieure d'un carénage aérodynamique arrière du mât d'accrochage, ce carénage aérodynamique arrière étant situé entièrement en arrière par rapport à l'attache moteur arrière.

Cette configuration est extrêmement avantageuse du point de vue aérodynamique. En effet, le carénage précité, également appelé « bouclier » ou encore « Aft Pylon Fairing » et faisant habituellement saillie vers l'arrière d'un bord de fuite de l'aile, est en général impacté par le jet du moteur, ce qui entraîne une traînée non négligeable et relativement contraignante en terme de performance. Le fait de prévoir que cette extrémité débouche au niveau de la paroi extérieure du carénage permet ainsi de faire baigner ce dernier dans une lame d'air le protégeant du jet du moteur. Par conséquent, la traînée engendrée par l'impact réduit du jet chaud sur le carénage arrière inférieur est largement diminuée par rapport à celle rencontrée antérieurement, ce qui induit avantageusement des gains de performance.

A ce titre, dans le but de simultanément accroître la poussée générée par l'air ventilé, améliorer l'efficacité du système de protection thermique, et accentuer la protection du carénage aérodynamique arrière contre l'impact du jet moteur, on place de préférence l'extrémité arrière du conduit ventilé au niveau d'une rupture / d'un culot de ce carénage, de manière à créer une aspiration accentuée et donc d'obtenir un différentiel de pression encore supérieur.

Une alternative à la solution précitée pourrait consister à prévoir que l'extrémité arrière du conduit ventilé débouche à l'intérieur du carénage aérodynamique arrière du mât d'accrochage. Dans un tel cas, il serait alors opportun de prévoir une ouverture de sortie d'air à l'arrière de ce carénage pour assurer l'extraction de l'air ventilé, cette ouverture pouvant éventuellement être couplée à une structure mobile pilotable, qui, en fonction de sa position, permet de modifier la forme aérodynamique dudit carénage. Avec un tel agencement où la structure mobile est de préférence placée à travers l'ouverture, le pilotage de la structure mobile permet donc de réduire / d'augmenter l'aspiration de l'air sortant de l'ouverture prévue sur ce carénage, suivant que ce dernier est dans une configuration définissant un ou plusieurs décrochements visant à créer un effet de culot pour générer une aspiration d'air importante, ou dans une configuration définissant une forme aérodynamique sensiblement continue et sans décrochement, afin de provoquer le moins de traînée possible.

Ainsi, dans le cas non limitatif où le moteur est destiné à être suspendu sous la voilure de l'aéronef, cet agencement permet globalement de déporter l'attache moteur arrière vers le bas par rapport au caisson, grâce au bloc structural inférieur faisant donc partie intégrante de la structure rigide et étant assimilable à une étrave ou un sabot. L'adjonction de ce bloc par rapport aux réalisations de l'art antérieur dans lesquelles la structure rigide était exclusivement constituée du caisson permet de procurer de nombreux avantages, dont celui d'éloigner ce même caisson du moteur suspendu au mât. Par conséquent, les conditions thermiques que subit ce caisson sont bien moins importantes que celles rencontrées antérieurement dans des réalisations où l'interface de fixation de l'attache moteur arrière était située directement sur le longeron inférieur. Cet allègement des conditions thermiques permet donc d'envisager l'emploi de matériaux moins sensibles à la chaleur pour la fabrication du caisson rigide, tels que les matériaux composites déjà évoqués ci-dessus. Dans un tel cas, il peut avantageusement en découler un gain de masse très important pour l'ensemble du mât d'accrochage.

En outre, il permet de dissocier la conception du bloc structural, essentiellement dictée par la nécessité d'assurer le passage des efforts provenant de l'attache moteur arrière, de celle du caisson, principalement dimensionné en fonction de l'interface voilure qu'il supporte. Cette particularité implique que la largeur du bloc est très inférieure à celle du caisson, procurant ainsi un avantage considérable en terme de performances aérodynamiques, étant donné que c'est le bloc de faible largeur qui se trouve dans la zone d'écoulement du flux secondaire, et non plus la partie inférieure du caisson de largeur plus élevée. Les perturbations aérodynamiques au droit de l'attache moteur arrière sont ainsi fortement diminuées par rapport à celles rencontrées antérieurement.

D'autre part, il est bien entendu à comprendre que la géométrie du caisson n'est plus influencée par la nécessité de se rapprocher du carter moteur, puisque cette fonction peut être entièrement assurée par le bloc structural inférieur rapporté fixement sur ce caisson. La géométrie de ce dernier peut par conséquent être considérablement simplifiée, tout comme sa fabrication, notamment en prévoyant une face inférieure de caisson plane d'un bout à l'autre de la structure rigide. Sa masse est alors réduite et parfaitement optimisée, dans la mesure où la partie inférieure du caisson ne présente avantageusement plus de décrochement de largeur importante exclusivement destiné à se rapprocher du carter moteur.

Enfin, il est indiqué que le bloc faisant saillie du caisson vers le bas et ne s'étendant que sur une faible longueur longitudinale de la structure rigide permet aisément d'envisager de faire passer des canalisations ou éléments similaires à travers ce même bloc structural. Cette faculté offerte aux équipements du mât tels qu'un système d'échangeur thermique facilite donc l'accès à la partie arrière de la structure rigide, qui, dans l'art antérieur, nécessitait de traverser le caisson dont l'accessibilité est relativement délicate.

En outre, cette faculté s'offre également au système de protection thermique du caisson qui peut donc voir son conduit ventilé traverser le bloc structural, cette solution constituant alors une façon relativement simple d'amener l'extrémité arrière du conduit ventilé en aval de l'attache moteur arrière supportée par ce même bloc.

Toujours de manière préférentielle, le conduit de préférence ventilé est situé au-dessous et à distance du longeron inférieur du caisson, de manière à définir conjointement avec celui-ci un passage ventilé secondaire. Avec cet agencement, le passage ventilé secondaire constitue alors une zone dite « zone adjacente feu », tandis que le caisson se retrouve de fait dans une zone dite « zone hors feu », dans laquelle les contraintes sont bien entendu moins importantes. Cette spécificité autorise avantageusement le passage de divers éléments à travers le caisson de la structure rigide, sans que cela ne contrevienne aux normes de sécurité. D'autre part, la conception de ce caisson n'a plus à être dictée par une quelconque exigence feu, comme cela était pourtant le cas antérieurement. Il est noté à titre indicatif que dans le cas où le moteur est situé au-dessus de la voilure, le conduit ventilé et le passage ventilé secondaire sont alors bien entendu placés au-dessus du longeron supérieur du caisson.

De préférence, le passage ventilé secondaire est également délimité latéralement par des capots d'une nacelle du moteur.

Enfin, pour renforcer encore davantage l'efficacité du système de protection thermique du caisson, celui-ci peut être pourvu d'un revêtement de protection thermique équipant le conduit formant la barrière thermique dite « barrière feu », par exemple placé sur une surface externe inférieure de ce conduit, c'est-à-dire en regard du moteur.

L'invention a également pour objet un aéronef comprenant au moins un ensemble moteur tel que celui qui vient d'être présenté.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue de côté d'un ensemble moteur pour aéronef selon un mode de réalisation préféré de la présente invention, le système de protection thermique du caisson ayant été volontairement omis pour des raisons de clarté ;
- la figure 2 représente une vue en perspective agrandie du bloc structural inférieur appartenant à la structure rigide du mât d'accrochage de l'ensemble moteur montré sur la figure 1 ;
- la figure 3 représente une vue similaire à celle de la figure 1, montrant le système de protection thermique du caisson ;
- la figure 4 représente une vue de côté d'un ensemble moteur pour aéronef, cet ensemble se présentant sous la forme d'une alternative du mode de réalisation préféré montré sur les figures 1 à 3 ;
- la figure 5 représente une vue schématique en coupe prise le long de la ligne V-V de la figure 4 ;
- les figures 6a et 6b représentent des vues de dessus d'une portion arrière du carénage aérodynamique arrière du mât d'accrochage appartenant à l'ensemble montré sur la figure 3, représentant plus spécifiquement une structure mobile pilotable capable de réduire / d'augmenter l'aspiration de l'air en sortie du carénage ; et
- la figure 7 représente une vue similaire à celles montrées sur les figures 6a et 6b, la structure mobile pilotable se présentant sous une forme alternative de réalisation.

### EXPOSÉ DÉTAILLÉ DE MODES DE RÉALISATION PRÉFÉRÉS

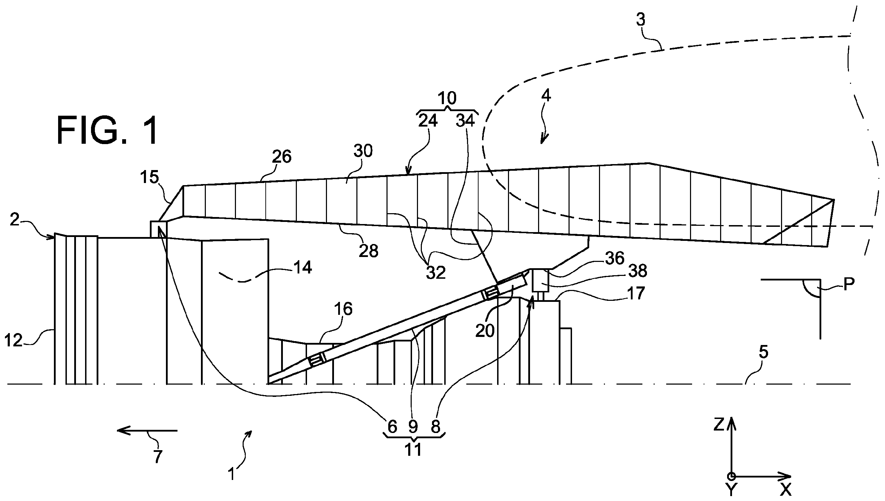

En référence à la figure 1, on voit un ensemble moteur 1 pour aéronef destiné à être fixé sous une aile 3 de cet aéronef, cet ensemble 1, pourvu d'un mât d'accrochage 4, se présentant sous la forme d'un mode de réalisation préféré de la présente invention.

Globalement, l'ensemble moteur 1 comporte un moteur tel qu'un turboréacteur 2 et le mât d'accrochage 4, ce dernier étant notamment muni d'une structure rigide 10 et d'un système de montage 11 composé d'une pluralité d'attaches moteur 6, 8 et d'un dispositif de reprise des efforts de poussée 9 généré par le turboréacteur 2, le système de montage 11 étant donc interposé entre le moteur et la structure rigide 10 précitée. A titre indicatif, il est noté que l'ensemble 1 est destiné à être entouré d'une nacelle (non représentée sur cette figure), et que le mât d'accrochage 4 comporte une autre série d'attaches (non représentées) permettant d'assurer la suspension de cet ensemble 1 sous la voilure de l'aéronef.

Dans toute la description qui va suivre, par convention, on appelle X la direction longitudinale du mât 4 qui est également assimilable à la direction longitudinale du turboréacteur 2, cette direction X étant parallèle à un axe longitudinal 5 de ce turboréacteur 2. D'autre part, on appelle Y la direction orientée transversalement par rapport au mât 4 et également assimilable à la direction transversale du turboréacteur 2, et Z la direction verticale ou de la hauteur, ces trois directions X, Y et Z étant orthogonales entre-elles.

D'autre part, les termes « avant » et « arrière » sont à considérer par rapport à une direction d'avancement de l'aéronef rencontrée suite à la poussée exercée par le turboréacteur 2, cette direction étant représentée schématiquement par la flèche 7.

Sur la figure 1, on peut voir que seuls le dispositif de reprise 9, les attaches moteur 6, 8, et la structure rigide 10 du mât d'accrochage 4 ont été représentées. Les autres éléments constitutifs non représentés de ce mât 4, tels que les moyens d'accrochage de la structure rigide 10 sous la voilure de l'aéronef, ou encore la structure secondaire assurant la ségrégation et le maintien des systèmes tout en supportant des carénages aérodynamiques, sont des éléments classiques identiques ou similaires à ceux rencontrés dans l'art antérieur, et connus de l'homme du métier. Par conséquent, il n'en sera fait aucune description détaillée, mis à part pour le carénage aérodynamique arrière susceptible de présenter une particularité liée à la présente invention.

Le turboréacteur 2 dispose à l'avant d'un carter de soufflante 12 de grande dimension délimitant un canal annulaire de soufflante 14, et comporte vers l'arrière un carter central 16 de plus petite dimension, renfermant le coeur de ce turboréacteur. Enfin, le carter central 16 se prolonge vers l'arrière par un carter d'éjection 17 de plus grande dimension que celle du carter 16. Les carters 12, 16 et 17 sont bien entendu solidaires les uns des autres.

Comme on peut l'apercevoir sur la figure 1, la pluralité d'attaches moteur est constituée par une attache moteur avant 6 et une attache moteur arrière 8 formant éventuellement deux demi-attaches arrière tel que cela est connu de l'art antérieur. Le dispositif de reprise 9 prend par exemple la forme de deux bielles latérales (une seule étant visible en raison de la vue de côté) raccordées d'une part à une partie arrière du carter de soufflante 12, et d'autre part sur un palonnier 20, lui-même monté sur la structure rigide 10.

L'attache moteur avant 6, solidarisée à la ferrure 15 de la structure rigide 10 et au carter de soufflante 12, est conçue classiquement de manière à pouvoir reprendre uniquement des efforts générés par le turboréacteur 2 selon les directions Y et Z, et donc pas ceux s'exerçant selon la direction X. A titre indicatif, cette attache avant 6 pénètre de préférence dans une portion d'extrémité circonférentielle du carter de soufflante 12.

L'attache moteur arrière 8 est globalement interposée entre le carter d'éjection 17 et la structure rigide 10 du mât. Comme indiqué précédemment, elle est de préférence conçue de manière à pouvoir reprendre des efforts générés par le turboréacteur 2 selon les directions Y et Z, mais pas ceux s'exerçant selon la direction X.

De cette manière, avec le système de montage 11 de nature isostatique, la reprise des efforts s'exerçant selon la direction X s'effectue à l'aide du dispositif 9, et la reprise des efforts s'exerçant selon les directions Y et Z s'effectue conjointement à l'aide de l'attache avant 6 et de l'attache arrière 8.

D'autre part, la reprise du moment s'exerçant selon la direction X s'effectue verticalement à l'aide de l'attache 8, la reprise du moment s'exerçant selon la direction Y s'effectue verticalement à l'aide de l'attache arrière 8 conjointement avec l'attache 6, et la reprise du moment s'exerçant selon la direction Z s'effectue transversalement à l'aide de l'attache 8, conjointement avec l'attache 6.

Toujours en référence à la figure 1, on peut apercevoir que la structure 10 présente tout d'abord un caisson 24 s'étendant d'un bout à l'autre de cette structure 10 dans la direction X, et forme donc un caisson de torsion dit caisson principal de la structure. Il est classiquement formé par un longeron supérieur 26 et un longeron inférieur 28, ainsi que par deux panneaux latéraux 30 (un seul étant visible sur la figure 1) s'étendant tous les deux selon la direction X et sensiblement dans un plan XZ. A l'intérieur de ce caisson, des nervures transversales 32 agencées selon des plans YZ et espacées longitudinalement viennent renforcer la rigidité du caisson 24. Il est noté à titre indicatif que les éléments 26, 28 et 30 peuvent chacun être réalisés d'un seul tenant, ou bien par l'assemblage de sections jointives, qui peuvent éventuellement être légèrement inclinées les unes par rapport aux autres.

De préférence, comme le montre clairement la figure 1, le longeron inférieur 28 est plan sur toute sa longueur, ce plan étant sensiblement parallèle à un plan XY ou légèrement incliné par rapport à ce dernier.

Dans ce cas où le moteur est destiné à être suspendu sous la voilure, il est prévu de monter fixement, sur la surface externe du longeron inférieur 28, un bloc structural 34 dit bloc structural inférieur 34 en raison de sa position sous le caisson 24. Néanmoins, il est noté que dans un cas non décrit mais couvert par la présente invention où le moteur 2 serait monté au-dessus de l'aile 3, le bloc structural serait alors rapporté fixement sur le longeron supérieur 26 du caisson.

Le bloc 34 présente une interface de fixation 36 de l'attache arrière 8, cette interface 36 étant donc située en dessous du plan dans lequel se trouve le longeron 28, et de préférence orientée selon un plan XY. Comme cela sera décrit ultérieurement, il est précisé que cette interface de fixation 36 est destinée à coopérer avec un corps d'attache de l'attache moteur arrière 8.

Cette solution dans laquelle la largeur du bloc 34 selon la direction Y est moins importante que celle du caisson 24, permet par conséquent de déporter l'attache 8 vers le bas par rapport au caisson 24, et donc d'espacer le moteur 2 de ce dernier.

Les sollicitations thermiques appliquées au caisson 24 sont ainsi relativement peu élevées, de sorte qu'il devient possible de le fabriquer en matériau composite, ou dans tout autre matériau sensible à la chaleur susceptible d'engendrer un gain en terme de masse globale du mât 4. En revanche, le bloc 34 plus exposé à ces sollicitations thermiques en raison de sa proximité avec le moteur 2 peut être réalisé avec un matériau métallique, de préférence le titane.

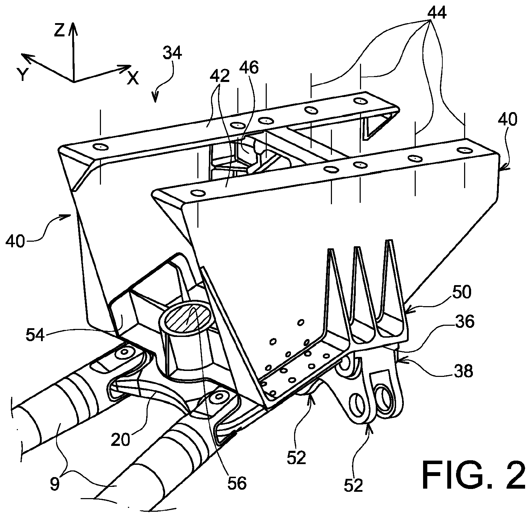

En référence à présent à la figure 2, on peut apercevoir que le bloc structural 34 fixé sous le longeron inférieur 28 présente globalement deux flancs latéraux 40, chacun équipé en partie supérieure d'une ailette de fixation 42 orientée selon le plan de ce même longeron 28 afin de contacter ce dernier et d'assurer la fixation du bloc 34 sur le caisson 24. A ce titre, cette fixation est de préférence réalisée par l'intermédiaire d'une pluralité de boulons de traction et de pions de cisaillement (non représentés) agencés perpendiculairement au longeron inférieur 28, selon des axes 44 traversant les ailettes 42. Ces moyens de fixation permettent avantageusement de réduire la conduction thermique entre le bloc 34 et le longeron inférieur 28, cette conduction pouvant être encore davantage réduite en intercalant des bagues ou des rondelles isolantes entre ces deux éléments 24, 34.

D'autre part, le bloc 34 comporte également une ou plusieurs nervures transversales 46 agencées entre les deux flancs 40, et de préférence orientées selon des plans YZ.

L'interface de fixation 36 est définie par une portion inférieure 50 des deux flancs 40, éventuellement en combinaison avec l'une des nervures 46 se présentant de préférence sous la forme d'un cadre. Ainsi, cette interface de fixation 36 formée par les deux portions inférieures 50 des flancs 40 et par la partie inférieure de la nervure 46 en question constituent globalement une bande horizontale s'étendant selon la direction Y sur laquelle vient se fixer le corps d'attache 38 de l'attache moteur arrière 8, de préférence par l'intermédiaire de boulons.

Ce corps d'attache 38 est du type connu et de conception sensiblement identique à celle rencontrée antérieurement dans les réalisations dans lesquelles ce corps était monté directement sur le longeron inférieur 28 du caisson. Ainsi, celui-ci définit des chapes 52 sur lesquelles sont articulées des manilles (non représentées) également destinées à être articulées sur des ferrures solidaires du moteur.

En outre, une ferrure de fixation 54 du palonnier 20 est aussi agencée entre les deux flancs latéraux 40, de préférence en avant par rapport au corps d'attache 38. Cette ferrure 54 porte alors un pivot 56 du palonnier 20, lui-même articulé à ses deux extrémités avec les deux bielles 9 de reprise des efforts de poussée.

Enfin, il est indiqué que ce bloc 34 peut prendre la forme d'un caisson rigide secondaire, et incorporer des plaques de fermeture avant et arrière (non représentées) solidaires des flancs 40, fermant respectivement ce caisson vers l'avant et vers l'arrière.

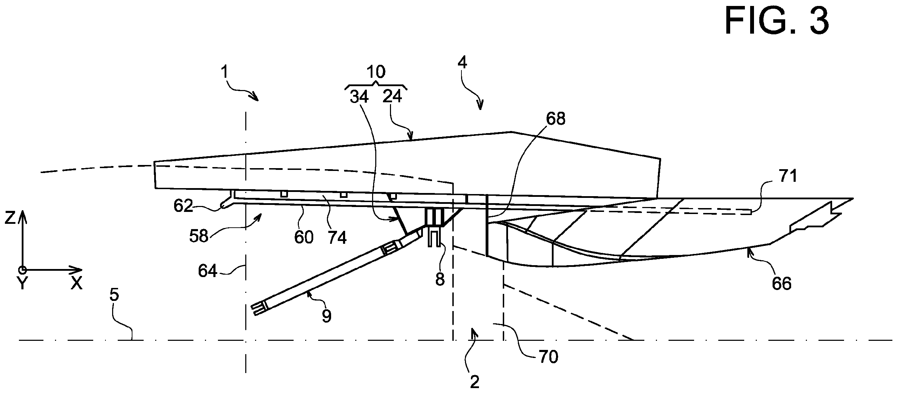

En référence à la figure 3, on voit que l'ensemble moteur 1 comporte en plus un système 58 de protection thermique du caisson 24, qui participe à rendre possible l'utilisation d'un matériau composite pour la fabrication de ce dernier.

Globalement, ce système 58 comprend un conduit préférentiellement ventilé 60 s'étendant sous le longeron inférieur 28, de préférence parallèlement à celui-ci. Le conduit 60, également appelé jupe, dispose de préférence d'une section transversale prenant sensiblement la forme d'un rectangle dont la longueur s'étendant selon la direction Y est préférentiellement supérieure à la largeur du caisson 24.

Le conduit 60 dispose d'une extrémité avant pourvue d'une prise d'air 62 située à proximité de la jonction entre la partie soufflante du moteur et la partie inversion de poussée, cette jonction étant schématiquement représentée par la ligne 64. Ainsi, comme on peut le voir sur la figure 3, cette prise d'air 62 est préférentiellement agencée sous le caisson 24, en amont de la jonction 64 et en sortie du canal annulaire de soufflante (non représenté) de manière à être alimentée par l'air frais sortant de celui-ci.

L'une des particularités de l'invention réside dans le fait que le conduit ventilé 60 s'étend vers l'arrière au-delà de l'attache moteur arrière 8, ce qui permet notamment d'accroître l'efficacité du système de protection 58.

Pour ce faire, comme on peut le voir sur la figure 3, on prévoit que ce conduit 60 traverse longitudinalement le bloc structural 34, ce qui est relativement simple à mettre en oeuvre en raison de la faible longueur du bloc 34 selon la direction X.

Sur cette même figure 3, il a été représenté l'un des carénages aérodynamiques équipant le mât 4, qui est plus spécifiquement connu sous l'appellation carénage aérodynamique arrière ou carénage aérodynamique arrière inférieur, ou encore « bouclier » ou « Aft Pylon Fairing ». Ce carénage 66 agencé sous le caisson 24 se trouve entièrement situé en arrière par rapport l'attache 8, et fait habituellement saillie vers l'arrière d'un bord de fuite de l'aile 3. Il ne fait donc pas partie de la structure rigide du mât, mais est raccordé à celle-ci par une ferrure de support 68 montée fixement sous le caisson 24, en arrière par rapport au bloc 34. De façon connue, sa partie avant inférieure vient sensiblement tangenter une partie supérieure de la tuyère d'éjection 70 du moteur 2.

Dans ce mode de réalisation préféré, le conduit ventilé 60 est tel qu'il s'étend au-delà du bloc 34 jusqu'à pénétrer à l'intérieur du carénage 66, de sorte que l'extrémité de sortie de ce conduit soit par exemple située à proximité d'une portion arrière du carénage 66.

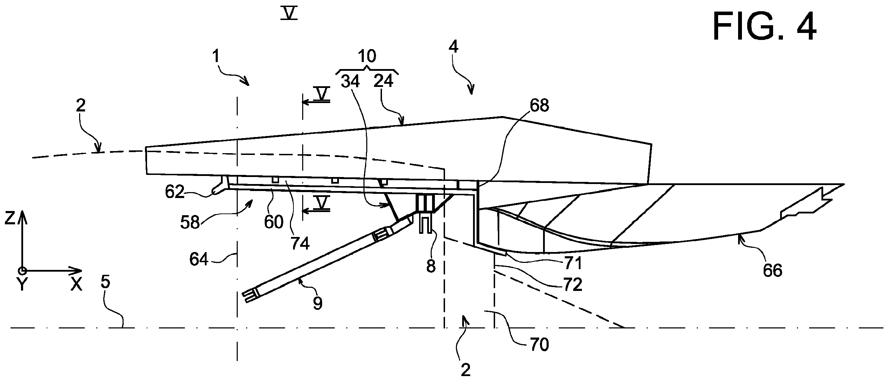

Sur la figure 4 représentant une forme alternative de réalisation du mode de réalisation préféré montré sur les figures 1 à 3, on peut voir que le conduit ventilé 60 ne rentre pas à l'intérieur du carénage 66, mais présente une coude en aval du bloc 34 lui permettant de longer la ferrure de support 68 vers le bas. Un autre coude est prévu de manière à ce qu'une portion d'extrémité de ce conduit 60 puisse cheminer entre la partie avant inférieure du carénage 66 et la partie supérieure de la tuyère d'éjection 70. Ainsi, on prévoit qu'une sortie 71 de ce conduit 60 débouche au niveau de la paroi extérieure du carénage 66, de préférence sur une partie latérale ou inférieure de celle-ci, et en aval d'une extrémité d'éjection 72 de la tuyère 70. En outre, la sortie / extrémité arrière 71 du conduit ventilé 60 est de préférence agencée au niveau d'une rupture / d'un décrochement pratiqué sur la paroi extérieure du carénage 66, de manière à créer un effet de culot et donc une aspiration accentuée de l'air sortant du conduit 60, ce qui permet bien évidemment d'obtenir un différentiel de pression accentué ainsi qu'une efficacité accrue du système de protection thermique 58.

En outre, il est rappelé que le positionnement particulier de la sortie 71 au niveau de la paroi extérieure du carénage 66 permet de faire baigner ce dernier dans une lame d'air le protégeant du jet du moteur, ce qui implique avantageusement une diminution de la traînée engendrée par l'impact du jet chaud sur ce carénage 66.

Dans chacun des deux cas représentés sur les figures 3 et 4, on prévoit que le conduit ventilé 60 se situe en dessous et à distance du longeron 28, de façon à former avec celui-ci un passage ventilé secondaire 74, participant au refroidissement du caisson 24 avec lequel il est donc directement en contact. Ce passage 74 est de préférence alimenté en air frais par l'intermédiaire d'un prélèvement extérieur au moteur 2.

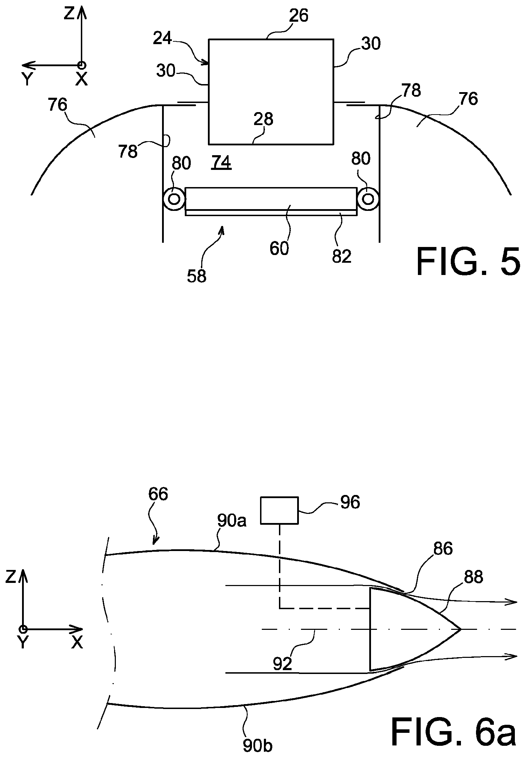

Comme on peut l'apercevoir sur la figure 5, les deux capots d'inverseur de poussée 76 de la nacelle du moteur portent respectivement, sur leurs flancs latéraux intérieurs 78, des joints d'étanchéité 80 s'étendant longitudinalement et venant en appui contre les deux côtés du conduit 60, orientés dans des plans XZ. Ainsi, le passage 74 est sensiblement fermé et étanche sur tout son pourtour, notamment en raison de l'interface articulée des capots 76 sur les panneaux latéraux 30 du caisson 24.

Le passage ventilé secondaire 74 constitue ainsi une zone dite « zone adjacente feu », et le caisson 24 se retrouve quant à lui dans une zone dite « zone hors feu » dans laquelle les contraintes sécuritaires sont bien entendu moins importantes. La « zone feu » se trouve elle au dessous du conduit 60, qui peut éventuellement être équipé d'un revêtement de protection thermique 82, par exemple du type MINK^{®} (produit par la société Gehier) correspondant à un mélange de fibres de verre et de silicone. Comme on peut le voir sur la figure 5, ce revêtement 82 est de préférence agencé sous le conduit 60, c'est-à-dire entre la partie inférieure de ce conduit et le moteur 2.

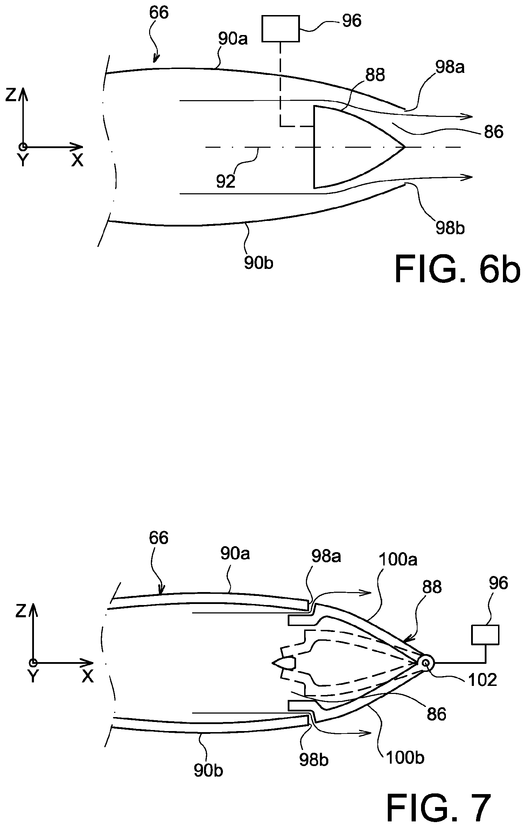

Etant donné que l'air extrait du conduit ventilé 60 est utilisé pour générer de la poussée, le cas décrit ci-dessus dans lequel ce conduit débouche à l'intérieur du carénage 66 nécessite de prévoir une ouverture de sortie d'air sur ce dernier. En référence aux figures 6a et 6b, on peut apercevoir une première façon de réaliser la portion arrière du carénage aérodynamique 66, celui-ci étant alors pourvu de ladite ouverture de sortie d'air 86 dans sa portion d'extrémité arrière.

Dans cette réalisation, on voit que l'ouverture 86 est couplée à une structure mobile pilotable 88, qui, en fonction de sa position, permet de modifier la forme aérodynamique du carénage 66. En effet, cette structure 88 prend de préférence la forme d'une ogive ou similaire, qui, lorsqu'elle occupe une position arrière dite position déployée aérodynamique, fait saillie depuis l'ouverture 86 de manière à se situer sensiblement dans le prolongement aérodynamique des revêtements latéraux 90a et 90b du carénage 66, comme cela est visible sur la figure 6a. Cette structure 88, qui est pilotable en translation selon une direction 92 de préférence sensiblement parallèle à la direction X, par exemple par l'intermédiaire de moyens d'actionnement 96 lui étant reliés, permet donc d'obtenir un carénage 66 de forme aérodynamique sensiblement continue et sans décrochement, qui génère une traînée peu importante. A titre indicatif, cette position aérodynamique sera préférentiellement adoptée durant les phases de vitesses élevées de l'aéronef, étant donné que celles-ci demandent une traînée faible, et qu'elles génèrent un écoulement suffisamment important au sein du conduit 60 pour procurer un refroidissement satisfaisant du caisson 24.

Sur la figure 6b représentant la structure mobile 88 dans une position avant dite position escamotée d'aspiration, on peut voir que cette structure 88 est quasiment entièrement rentrée par rapport à l'ouverture 86 qui dispose alors d'une section plus importante, ce qui implique notamment que le prolongement aérodynamique des revêtements latéraux 90a et 90b du carénage 66 n'est plus assuré. Au contraire, un décrochement ou rupture aérodynamique 98a, 98b apparaît au niveau de l'extrémité arrière de chacun de ces deux revêtements 90a, 90b, ce qui génère des effets de culot provoqués par l'air léchant la paroi extérieure de ces revêtements 90a, 90b. Ces effets de culot assurent ainsi une augmentation de l'aspiration de l'air sortant de l'ouverture 86, favorisant de ce fait l'efficacité du système de protection 58.

Par conséquent, cette position d'aspiration sera préférentiellement adoptée durant les phases de vitesses faibles de l'aéronef. Effectivement, à faible vitesse, la traînée provoquée par les décrochements 98a, 98b n'est pas pénalisante, et l'aspiration créée par ceux-ci permet d'augmenter le différentiel de pression, qui, sans la présence de ces décrochements, serait d'une valeur peu élevée due à la faible vitesse de l'aéronef.

En référence à présent à la figure 7, on peut apercevoir une seconde façon de réaliser la portion arrière du carénage aérodynamique 66, celui-ci étant également pourvue de l'ouverture de sortie d'air 86 dans sa portion d'extrémité arrière.

Dans cette réalisation, on voit que l'ouverture 86 est couplée à une structure mobile 88 qui ne prend plus la forme d'une ogive, mais de deux panneaux 100a, 100b articulés l'un par rapport à l'autre au niveau de leur extrémité arrière selon un axe 102 de préférence parallèle à la direction Y, ces panneaux 100a, 100b faisant en permanence saillie de l'ouverture 86.

Dans la position écartée représentée en traits pleins, dite position déployée aérodynamique, les deux panneaux 100a, 100b disposent d'une extrémité avant en appui contre l'extrémité arrière des revêtement 90a, 90b du carénage 66, de manière à se situer sensiblement dans le prolongement aérodynamique de ces derniers. Cette structure 88, qui est donc pilotable en rotation selon l'axe 102, par exemple par l'intermédiaire des moyens d'actionnement 96 lui étant reliés, permet donc d'obtenir un carénage 66 de forme aérodynamique sensiblement continue et sans décrochement, qui génère une traînée peu importante.

Dans la position rapprochée dite position escamotée d'aspiration représentée en pointillés sur la figure 7, on peut voir que les deux extrémités avant des panneaux 100a, 100b qui ont été rapprochés par pivotement sont respectivement très éloignées des extrémités arrière des revêtement 90a, 90b, impliquant notamment que l'ouverture 86 dispose d'une section plus importante, mais surtout que le prolongement aérodynamique de ces revêtements latéraux 90a et 90b du carénage 66 n'est plus assuré. Au contraire, un décrochement ou rupture aérodynamique 98a, 98b apparaît entre l'extrémité arrière de chacun de ces deux revêtements 90a, 90b et son panneau 100a, 100b associé situé plus en arrière, ce qui génère des effets de culot provoqués par l'air léchant la paroi extérieure de ces revêtements 90a, 90b.

Bien entendu, diverses modifications peuvent être apportées par l'homme du métier aux ensembles moteur 1 pour aéronef qui viennent d'être décrits, uniquement à titre d'exemples non limitatifs. A cet égard, on peut notamment indiquer qui si le mât 4 a été présenté dans une configuration adaptée pour qu'il soit suspendu sous la voilure de l'aéronef, ce mât 4 pourrait également se présenter dans une configuration différente lui permettant d'être monté au-dessus de cette même voilure, voire en partie arrière du fuselage de l'aéronef.

## Revendications

1. Ensemble moteur (1) pour aéronef comprenant un moteur (2) et un mât d'accrochage (4) du moteur, ledit mât comportant d'une part une structure rigide (10) comprenant un caisson (24) et d'autre part un système de montage (11) interposé entre le moteur et ladite structure rigide (10), ce système de montage comportant notamment une attache moteur arrière (8), ledit ensemble étant en outre pourvu d'un système de protection thermique (58) du caisson (24) comportant un conduit (60) formant une barrière thermique et s'étendant entre ledit caisson (24) et le moteur (2), ledit conduit (60) s'étendant vers l'arrière au-delà de ladite attache moteur arrière (8), **caractérisé en ce que** ladite structure rigide (10) du mât d'accrochage (4) comporte également un bloc structural (34) monté fixement sur ledit caisson (24) entre ce dernier et ledit moteur (2), ce bloc structural (34) présentant une interface de fixation (36) de ladite attache moteur arrière (8) et étant traversé par ledit conduit (60).

2. Ensemble moteur (1) selon la revendication 1, **caractérisé en ce que** ledit conduit (60) est un conduit ventilé.

3. Ensemble moteur (1) selon la revendication 2, **caractérisé en ce que** ledit conduit ventilé (60) dispose d'une extrémité arrière (71) débouchant au niveau de la paroi extérieure d'un carénage aérodynamique arrière (66) du mât d'accrochage, ledit carénage aérodynamique arrière (66) étant situé entièrement en arrière par rapport à ladite attache moteur arrière (8).

4. Ensemble moteur (1) selon la revendication 2, **caractérisé en ce que** ledit conduit ventilé (60) dispose d'une extrémité arrière (71) débouchant à l'intérieur d'un carénage aérodynamique arrière (66) du mât d'accrochage, ledit carénage aérodynamique arrière (66) étant situé entièrement en arrière par rapport à ladite attache moteur arrière (8) .

5. Ensemble moteur (1) selon la revendication 4, **caractérisé en ce que** ledit carénage aérodynamique arrière (66) comprend une ouverture de sortie d'air (86) équipée d'une structure mobile pilotable (88), qui, en fonction de sa position, permet de modifier la forme aérodynamique dudit carénage (66).

6. Ensemble moteur (1) selon la revendication 5, **caractérisé en ce que** ladite structure mobile (88) est placée à travers ladite ouverture de sortie d'air (86).

7. Ensemble moteur (1) selon l'une quelconque des revendications précédentes, **caractérisé en ce que** ledit conduit (60) est situé au-dessous et à distance d'un élément structural inférieur (28) du caisson (24), de manière à définir conjointement avec celui-ci un passage ventilé secondaire (74).

8. Ensemble moteur (1) selon la revendication7, **caractérisé en ce que** ledit passage ventilé secondaire (74) est également délimité latéralement par des capots (76) d'une nacelle dudit moteur.

9. Ensemble moteur (1) selon l'une quelconque des revendications précédentes, **caractérisé en ce que** ledit conduit (60) est équipé d'un revêtement de protection thermique (82).

10. Aéronef **caractérisé en ce qu'**il comprend au moins un ensemble moteur (1) selon l'une quelconque des revendications précédentes.

## Patentansprüche

1. Triebwerksanordnung (1) für ein Flugzeug, aufweisend ein Triebwerk (2) und einen Mast zum Aufhängen (4) des Triebwerks, wobei der Mast einerseits eine starre Struktur (10), welche einen Kasten (24) aufweist, und andererseits ein zwischen dem Triebwerk und der starren Struktur (10) eingesetztes Montagesystem (11) aufweist, wobei dieses Montagesystem insbesondere eine hintere Triebwerksbefestigung (8) aufweist, wobei die Anordnung außerdem mit einem System zum thermischen Schutz (58) des Kastens (24) versehen ist, welches eine Leitung (60) aufweist, welche eine thermische Barriere bildet und sich zwischen dem Kasten (24) und dem Triebwerk (2) erstreckt, wobei sich die Leitung (60) in Richtung auf das Heck über die hintere Triebwerksbefestigung (8) hinaus erstreckt, **dadurch gekennzeichnet, dass** die starre Struktur (10) des Masts zum Aufhängen (4) ebenfalls einen strukturellen Block (34) aufweist, welcher an dem Kasten (24) zwischen diesem Letzteren und dem Triebwerk (2) fest montiert ist, wobei dieser strukturelle Block (34) einen Befestigungsanschluss (36) der hinteren Triebwerksbefestigung (8) aufweist und von der Leitung (60) durchquert wird.

2. Triebwerksanordnung (1) nach Anspruch 1, **dadurch gekennzeichnet, dass** die Leitung (60) eine belüftete Leitung ist.

3. Triebwerksanordnung (1) nach Anspruch 2, **dadurch gekennzeichnet, dass** die belüftete Leitung (60) über ein hinteres Ende (71) verfügt, welches im Bereich der äußeren Wand einer hinteren aerodynamischen Verkleidung (66) des Masts zum Aufhängen mündet, wobei die hintere aerodynamische Verkleidung (66) vollständig rückwärtig in Bezug auf die hintere Triebwerksbefestigung (8) angeordnet ist.

4. Triebwerksanordnung (1) nach Anspruch 2, **dadurch gekennzeichnet, dass** die belüftete Leitung (60) über ein hinteres Ende (71) verfügt, welches im Inneren einer hinteren aerodynamischen Verkleidung (66) des Masts zum Aufhängen mündet, wobei die hintere aerodynamische Verkleidung (66) vollständig rückwärtig in Bezug auf die hintere Triebwerksbefestigung (8) angeordnet ist.

5. Triebwerksanordnung (1) nach Anspruch 4, **dadurch gekennzeichnet, dass** die hintere aerodynamische Verkleidung (66) eine Luftaustrittsöffnung (86) aufweist, welche mit einer steuerbaren, beweglichen Struktur (88) ausgerüstet ist, welche es ermöglicht, die aerodynamische Form der Verkleidung (66) in Abhängigkeit ihrer Position zu modifizieren.

6. Triebwerksanordnung (1) nach Anspruch 5, **dadurch gekennzeichnet, dass** die mobile Struktur (88) quer durch die Luftaustrittsöffnung (86) angeordnet ist.

7. Triebwerksanordnung (1) nach einem der vorhergehenden Ansprüche, **dadurch gekennzeichnet, dass** sich die Leitung (60) unterhalb eines und in Abstand zu einem unteren strukturellen Element (28) des Kastens (24) befindet, um gemeinsam mit diesem einen sekundären, belüfteten Kanal (74) zu definieren.

8. Triebwerksanordnung (1) nach Anspruch 7, **dadurch gekennzeichnet, dass** der sekundäre, belüftete Kanal (74) auch seitlich von Hauben (76) einer Gondel des Triebwerks begrenzt wird.

9. Triebwerksanordnung (1) nach einem der vorhergehenden Ansprüche, **dadurch gekennzeichnet, dass** die Leitung (60) mit einer thermischen Schutzschicht (82) ausgerüstet ist.

10. Luftfahrzeug, **dadurch gekennzeichnet, dass** es zumindest eine Triebwerksanordnung (1) nach einem der vorhergehenden Ansprüche aufweist.

## Claims

1. An aircraft engine assembly (1) comprising an engine (2) and a mount (4) for the engine, said engine mount including firstly a rigid structure (10) comprising a box (24) and secondly a mounting system (11) positioned between said engine and said rigid structure (10), this mounting system notably comprising an aft engine attachment (8), said assembly also being provided with a thermal protection system (58) for the box (24) comprising a duct (60) forming a heat barrier and extending between said box (24) and the engine (2), said duct (60) extends aftward beyond said aft engine attachment (8), **characterized in that** said rigid structure (10) of the engine mount (4) also comprises a structural block (34) fixedly mounted on said box (24) between this box and said engine (2), this structural block (34) having a securing interface (36) for said aft engine attachment (8) and being crossed by said duct (60).

2. An engine assembly (1) according to claim 1, **characterized in that** said duct (60) is a ventilated duct.

3. An engine assembly (1) according to claim 2, **characterized in that** said ventilated duct (60) has an aft end (71) leading to the outer wall of an aft pylon fairing (66) of the engine mount, said aft pylon fairing (66) being positioned fully aftward relative to said aft engine attachment (8).

4. An engine assembly (1) according to claim 2, **characterized in that** said ventilated duct (60) has an aft end (71) leading into inside said aft pylon fairing (66) of the engine mount, said aft pylon fairing (66) being positioned fully aftward relative to said aft engine attachment (8).

5. An engine assembly (1) according to claim 4, **characterized in that** said aft pylon fairing (66) comprises an air outlet opening (86) equipped with a controllable, mobile structure (88) which, in relation to its position, can modify the aerodynamic shape of said fairing (66).

6. An engine assembly (1) according to claim 5, **characterized in that** said mobile structure (88) is placed across said air outlet opening (86).

7. An engine assembly (1) according to any of the preceding claims, **characterized in that** said duct (60) is positioned underneath and away from a lower structural element (28) of the box (24), so as to define jointly therewith a secondary ventilated throughway (74) .

8. An engine assembly (1) according to claim 7, **characterized in that** said secondary ventilated throughway (74) is also delimited laterally by cowls (76) of a nacelle of said engine.

9. An engine assembly (1) according to any of the preceding claims, **characterized in that** said duct (60) is equipped with a thermal protection coating (82).

10. An aircraft **characterized in that** it comprises at least one engine assembly (1) according to any of the preceding claims.
